# EUROPÄISCHE PATENTSCHRIFT

(11) **EP 2 948 487 B1**
(45) Veröffentlichungstag und Bekanntmachung des Hinweises auf die Patenterteilung: **28.07.2021**
(21) Anmeldenummer: 14701729.7
(22) Anmeldetag: 24.01.2014
(51) Int. Cl.: C08G 18/12, C08G 18/40, C08G 18/42, C08K 5/11, C08K 5/357, C08G 101/00

(54) **FEUCHTIGKEITSHÄRTENDE POLYURETHAN-ZUSAMMENSETZUNG ENTHALTEND NACHHALTIG ERZEUGTE ROHSTOFFE**
MOISTURE-CURING POLYURETHANE COMPOSITION COMPRISING RENEWABLE RAW MATERIALS
COMPOSITION POLYURÉTHANE DURCISSANT À L'HUMIDITÉ, CONTENANT DES MATIÈRES PREMIÈRES PRODUITES DURABLEMENT

(30) Priorität: 25.01.2013 DE 102013201210
(43) Veröffentlichungstag der Anmeldung: 02.12.2015
(73) Patentinhaber: Henkel AG & Co. KGaA, 40589 Düsseldorf (DE)
(72) Erfinder: FRANKEN, Uwe, 41542 Dormagen (DE); JONSCHER, Karin, 40589 Düsseldorf (DE)
(86) Internationale Anmeldenummer: PCT/EP2014/051418
(87) Internationale Veröffentlichungsnummer: WO 2014/114758

(56) Entgegenhaltungen:
- EP-A1- 2 511 316
- EP-A2- 0 278 412
- EP-A2- 0 811 645
- WO-A2-2005/085310
- CN-A- 102 093 528
- DE-A1- 2 732 832
- DE-A1- 19 931 398
- US-A- 4 711 659
- US-A- 5 164 422
- US-A- 5 319 008
- None

## Beschreibung

Die Erfindung betrifft die Verwendung vernetzender, lösemittelfreier feuchtigkeitshärtender Polyurethan-Zusammensetzungen auf der Basis von Polyurethan-Prepolymer mit freien Isocyanatgruppen, hergestellt durch Umsetzung von mindestens einem Polyol aus der Gruppe der Polyetherpolyole, Polyesterpolyole, und deren Gemischen mit mindestens einem Polyisocyanat im stöchiometrischen Überschuß in einkomponentigen Klebstoffen oder reaktiven Schmelzklebstoffen.

Lösemittelfreie feuchtigkeitshärtende Polyurethan-Zusammensetzungen der vorgenannten Art und deren Verwendung sind allgemein bekannt. Üblicherweise werden zur Synthese dieser Polyurethan-Zusammensetzungen Polyole auf der Basis von petrochemischen Grundstoffen verwendet.

Da das Reservoir fossiler bzw. petrochemischer Rohstoffe endlich ist, ist es zur Schonung dieser Ressourcen wünschenswert, zumindest ein Teil dieser Polyole durch nachhaltig erzeugte Produkte zu substituieren. Die Verwendung von Polyolen, die aus nachwachsenden Rohstoffen hergestellt wurden, ist bereits bekannt. So werden bereits seit langem Polyole durch Umesterung von nativen Ölen und Fetten oder natürlich vorkommende Öle mit OH-Gruppen haltigen Triglyceriden für bestimmte Klebstoffformulierungen eingesetzt.

So werden in der DE 44 01 572 A1 zweikomponentige Polyurethan-Klebstoffe auf der Basis einer Isocyanat-Komponente und einer Polyol-Komponente beschrieben, welche neben einem oleochemischen Polyol 2 bis 7 Gewichtsprozent, bezogen auf das oleochemische Polyol, mindestens eines di- und/oder trifunktionellen Alkohols enthält und wobei die Hydroxylzahl der Alkohole oder deren Gemische 1100 bis 1850 beträgt. Diese Zusammensetzungen können zum Verkleben von starren oder flexiblen Substraten verwendet werden, insbesondere von Kunststoffen, Metallen, Glas oder besonders bevorzugt von Holz sowohl für Kombinationen dieser Substrate untereinander als auch für Verklebungen dieser Substrate mit sich selbst.

Die WO2002/066572 A1 beschreibt ebenfalls einen Polyurethan-Klebstoff, der auf einer Polyol-Komponente A aus 10 bis 98 Gew.-% mindestens eines oleochemischen Polyols, 1 bis 7,5 Gew.-% mindestens eines Diols mit einer Hydroxylzahl von 400 bis 2000 und 1 bis 7,5 Gew.-% mindestens eines drei-, vier- oder fünffunktionellen Polyols mit einer Hydroxylzahl von 200 bis 2000, und einer Polyisocyanat-Komponente B) basiert. Das NCO/OH-Verhältnis der Komponenten A und B) soll im Bereich von 1,5 bis 0,9 liegen. Der Zusatz von 0 bis 60 Gew.-%, bezogen auf das Polyol-Gemisch insgesamt, eines homogen gelösten Harzes zu der Polyol-Komponente soll eine starke Steigerung der Klebe-Festigkeit bewirken, die auch nach 24-stündigem Kochen und 7-tägigem Trocknen bei 60 °C kaum nachlässt. Der Klebstoff ist für tragende Bauteile aus Holz geeignet.

WO 2009/080740 A1 offenbart einen zweikomponentigen Polyurethanklebstoff, bestehend aus einer Polyol-Komponente, enthaltend 2 bis 30 Gew.% mindestens eines Polyesterdiols mit einem Molekulargewicht von mehr als 1000 g/mol, 5 bis 35 Gew.% mindestens eines 3 bis 14 funktionellen Polyols, 5 bis 35 Gew.% hydrophobe Polyole, 2 bis 65 Gew.% weitere Additive oder Hilfsstoffe, wobei die Summe 100% ergeben soll, sowie eine vernetzende Komponente aus Polyisocyanaten in einem NCO/OH-Verhältnis von 0,9:1 bis 1,5:1, wobei der vernetzte Klebstoff eine Glasübergangstemperatur (Tg) größer 50°C aufweist.

EP2468789 A1 beschreibt zweikomponentige Polyurethanzusammensetzungen, umfassend Rizinusöl, mindestens ein alkoxyliertes aromatisches Diol, mindestens ein Polyol mit 5 bis 8 Hydroxylgruppen sowie mindestens ein Polyisocyanat. Es wird angegeben, dass diese Zusammensetzungen über eine lange "Offenzeit" (offene Zeit) verfügen sollen und auch nach längerer Exposition gegenüber einem Klima mit hoher Luftfeuchtigkeit (z.B. 70% relative Luftfeuchtigkeit) auch noch nach 40 Minuten, insbesondere auch noch nach 60 Minuten, verklebt und zu Polymeren mit hoher mechanischer Festigkeit ausgehärtet werden können und so eine strukturelle Verklebung hergestellt wird. Diese zweikomponentigen Polyurethanzusammensetzungen sollen sich insbesondere zur Verwendung als strukturelle Klebstoffe, insbesondere für das Verkleben von Flügelhalbschalen von Rotorblättern für Windkraftanlagen, eignen.

Die WO 2007/027921 A1 offenbart lösemittelfreie wässrige Polyurethandispersionen zur Herstellung von Beschichtungen, die sich durch eine hohe Härte auszeichnen. Zur Herstellung der Polyurethandispersionen kann recycletes PET-Polyol eingesetzt werden.

Die US 2010/0273939 A1 offenbart wässrige Polyurethandispersionen basierend auf aliphatischen Isocyanaten, die harte Beschichtungen ausbilden und sich durch eine hohe Lösemittelbeständigkeit auszeichnen. Die verbesserten Eigenschaften werden durch die Verwendung von 1 bis 8 Gew.-% eines hochfunktionellen Polyols in der zur Herstellung der Dispersion verwendeten Polyolformulierung erreicht.

Die US 5319008 A beschreibt eine feuchtgkeitshärtende, im Wesentlichen lösemittelfreie und wasserfreie Mischung aus einem bituminösen Materials und einem flüssigen Prepolymer. Bei dem Prepolymer kann es sich um ein Polyurethanprepolymer handeln, das beispielsweise auf Recycling-PET basiert.

Wie vorstehend beispielhaft gezeigt, sind oleochemische Polyole aus nachwachsenden Rohstoffen, wie Rizinusöl, Rizinusölderivate sowie Umesterungsprodukte von anderen natürlichen Ölen, z. B. Sojaöl, für Polyurethanklebstoffe Stand der Technik und werden in großem Maße eingesetzt. Derartige oleochemische Produkte sind beispielsweise unter den Handelsnamen Sovermol bzw. Renuva von den Firmen BASF oder Dow erhältlich.
All diesen Polyolen ist gemeinsam, dass sie eine Funktionalitätsverteilung der OH Gruppe aufweisen, welche in der Regel ungleich 2 ist. Dadurch sind diese Polyole nur bedingt in einkomponentigen PU Prepolymeren einsetzbar, da diese aufgrund ihrer ungünstigen Verteilung der OH-Funktionalität zu instabilen 1 K PU Prepolymeren führen können. Dies äußert sich z.B. bei 1 K Polyurethanschmelzklebstoffen in einem schnellen Viskositätsanstieg bei der Verarbeitung oder bei 1K Kleb- und Dichtstoffen in einer stark eingeschränkten Lagerstabilität. Damit sind diese Polyole auf Basis nachwachsender Rohstoffe nicht oder nur sehr bedingt für 1 K PU Klebstoffe einsetzbar.

Eine weitere nachhaltige Rohstoffquelle ist die Verwendung von Recylingmaterialien, insbesondere recycelte Kunststoffe. Diese liegen aber meistens als undefiniertes Granulat vor, haben schwankende Qualitäten und Verunreinigungen. Ein weiter Nachteil ist, dass diese nur als "Füllstoff" in die Polyurethanprepolymere eingearbeitet werden können und nicht ein Bestandteil des Prepolymers sind.

Eine Ausnahme bildet sogenanntes Recycling- PET (Polyethylenterephthalat). Dieses wird aus PET Granulat durch Umesterung mit Diolen, z.B. Diethylenglycol, hergestellt und enthält endständige OH-Gruppen. Solche Polyole sind seit einiger Zeit kommerziell in verschiedenen OH Zahlen bzw. Molekulargewichten erhältlich.

US 4469824 lehrt, dass Abfälle von Terephthalsäureester in ein flüssiges Produkt überführt werden können. Dazu wird der Abfall oder recyceltes Polyethylenterephthalat (PET) mit Diethylenglycol und einem oder mehreren Oxyalkylen-Glycolen umgesetzt und ein Teil des verbleibenden Ethylenglycols wird abgezogen. Das Verhältnis der Glycole zu dem PET Abfall soll größer als 1,2:1 sein, damit eventuell vorhandene Diester nicht aus der Lösung separieren. Die so gewonnenen flüssigen Terephthalsäureester können als Polyol- Extenderkomponente in Polyisocyanurat-Schäumen verwendet werden.

WO 2006/080743 A1 beschreibt ein Verfahren zur Herstellung von Polyolen, Polyurethanen und Polyurethanschäumen. Dazu wird zunächst ein mehrwertiger Alkohol mit einer Polymersäure (polymere ungesättigte Fettsäure) umgesetzt. Dieses Umsetzungsprodukt wird zur Depolymerisation von Polyestern, Polyamiden und Polyurethanen verwendet. Anschließend wird das Depolymerisationsprodukt mit mehrbasigen Säuren, mehrwertigen Alkoholen und Aminen so umgesetzt, dass ein Produkt mit einer Säurezahl von 0,5 - 1 mgKOH/g, einer OH-Zahl von 10 - 500 mgKOH/g und einer Aminzahl von 1 - 50 mgKOH/g entsteht. Letzteres soll eine gute Verträglichkeit mit Polyetherpolyolen haben und eine gute Reaktivität zu Isocyanaten haben. Als Anwendung werden Herstellung von Schäumen, Kunstleder und polymerem Holz angeführt.

Aus JP 2002-003815 ist ein Verfahren zur Herstellung eines Polyurethan Klebstoffs unter Verwendung von recyceltem Polyethylenterephtalat bekannt. Dazu soll das regenerierte Polyester Polyol mit einen organischen Diisocyanat umgesetzt werden, ggf. unter Kettenverlängerungsreaktion und unter Verwendung niedermolekularer aktiven Wasserstoff enthaltenden Verbindungen, so dass ein Klebstoff, enthaltend ein Polyurethanharz, erhalten wird. Lösemittelfreie feuchtigkeitshärtende Polyurethan-Zusammensetzungen auf der Basis von Polyurethan-Prepolymeren mit freien Isocyanatgruppen werden in dieser Schrift nicht offenbart.

Aufgabe der vorliegenden Erfindung ist es deswegen, auch für die Herstellung von lösemittelfreien feuchtigkeitshärtenden Polyurethan-Zusammensetzungen auf der Basis von Polyurethan-Prepolymeren mit freien Isocyanatgruppen Wege aufzuzeigen, bei denen zumindest ein Teil der eingesetzten Polyole nachhaltig erzeugte Produkte sind.

Die erfindungsgemäße Lösung der Aufgabe ist den Patentansprüchen zu entnehmen.

Sie besteht im wesentlichen in der Verwendung lösemittelfreier feuchtigkeitshärtender Polyurethan-Zusammensetzung, zur Herstellung von einkomponentigen Klebstoffen oder reaktiven Schmelzklebstoffen wobei die Zusammensetzung 99,9 bis 75 Gew.-% mindestens ein Polyurethan-Prepolymer mit freien Isocyanatgruppen enthält, hergestellt durch Umsetzung von mindestens einem Polyol aus der Gruppe der Polyetherpolyole, Polyesterpolyole, und deren Gemischen mit mindestens einem Polyisocyanat im stöchiometrischen Überschuß, wobei mindestens ein Polyol ein recyceltes Polyethylenterephthalat (PET) ist. Weiterhin enthält diese Zusammensetzung 0,1 bis 25 Gew.-% mindestens eines Additivs aus der Gruppe der Katalysatoren, Harze, Weichmacher, Füller, Pigmente, Stabilisatoren oder Haftvermittler und weitere Polymere. Die Summe der vorgenannten Bestandteile ergibt 100 Gew.-%.

Als Polyetherpolyole sind Umsetzungsprodukte niedermolekularer polyfunktioneller Alkohole mit Alkylenoxiden besonders geeignet. Die Alkylenoxide weisen vorzugsweise 2 bis 4 C-Atome auf. Geeignet sind beispielsweise die Umsetzungsprodukte von Ethylenglycol, Propylenglycol, den isomeren Butandiolen, Hexandiolen oder 4,4'-Dihydroxy-diphenylpropan mit Ethylenoxid, Propylenoxid, Butylenoxid oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole mit den genannten Alkylen-oxiden zu Polyetherpolyolen geeignet. Weitere, im Rahmen der Erfindung geeignete Polyole entstehen durch Polymerisation von Tetrahydrofuran (Poly-THF). Diese Polyetherpolyole werden in dem Fachmann bekannter Weise hergestellt und sind kommerziell erhältlich.

Unter den genannten Polyetherpolyolen sind die Umsetzungsprodukte von niedermolekularen Alkoholen mit Propylenoxid unter Bedingungen, bei denen teilweise sekundäre Hydroxylgruppen entstehen, besonders geeignet.

Beispielsweise geeignet sind Polyetherpolyole mit einem Molekulargewicht von 200 bis 5000 g/mol, vorzugsweise 400 bis 4000 g/mol (zahlenmittleres Molekulargewicht, M_{N}, gemessen über GPC nach DIN 55672-1:2007-08). Dies entspricht Hydroxylzahlen (OH-Zahlen, bestimmt nach DIN 53240-2:2007-11) von 560 bis 22 mg KOH/g, vorzugsweise 280 bis 28 mg KOH/g bei difunktionellen Polyetherpolyolen. Bevorzugte Polyole sollen im Molekül 2 oder 3 OH-Gruppen aufweisen, insbesondere sind Diole mit Hydroxylzahlen zwischen 20 und 500 mg KOH/g geeignet

In einer besonderen Ausführungsform werden keine Polyetherpolyole eingesetzt.

Weiterhin sind Polyesterpolyole geeignet. Derartige Polyesterpolyole umfassen bevorzugt die Umsetzungsprodukte von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Zur Herstellung derartiger Polyesterpolyole geeignet sind insbesondere Hexandiol, Butandiol, Propandiol, Ethylenglycol, 1,4-Hydroxymethylcyclohexan, 2-Methyl-1,3-propandiol, Triethylenglycol, Tetraethylenglycol, Polyethylenglycol, Dipropylenglycol, Polypropylenglycol, Dibutylenglycol und Gemische solcher Alkohole.

Die erfindungsgemäß einzusetzenden Polyesterpolyole umfassen bevorzugt die Umsetzungsprodukte von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden.

Zur Herstellung derartiger Polyesterpolyole geeignet sind insbesondere Hexandiol, Butandiol, Propandiol, Ethylenglykol, 1,4-Hydroxymethylcyclohexan, 2-Methyl-1,3-propandiol, Triethylenglykol, Tetraethylenglykol, Polyethylenglykol, Dipropylenglykol, Polypropylenglykol, Dibutylenglykol und Gemische solcher Alkohole.

Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Als Tricarbonsäuren sind bevorzugt Zitronensäure oder Trimellithsäure geeignet. Die genannten Säuren können einzeln oder als Gemische aus zwei oder mehr davon eingesetzt werden. Dem Fachmann sind solche OHfunktionelle Polyester bekannt und sie sind kommerziell erhältlich. Insbesondere geeignet sind zwei oder drei endständige OH-Gruppen aufweisende Polyesterpolyole.

Für die Herstellung von Schmelzklebstoffen besonders geeignete Polyesterpolyole sind flüssige, amorphe oder kristalline Copolyester oder deren Mischungen, derartige Polyesterpolyole werden beispielsweise unter dem Namen Dynacoll von der Firma Evonik Industries AG geliefert. Vorzugsweise haben diese Polyesterpolyole eine Hydroxylzahl (bestimmt nach DIN 53240-2:2007-11) zwischen 10 und 200 mg KOH/g und eine Säurezahl (bestimmt nach DIN EN ISO 2114 Berichtigung 1:2006-11), die kleiner oder gleich 4, vorzugsweise kleiner oder gleich 2 mg KOH/g ist.

Erfindungsgemäß einsetzbare Polyole aus recycelten Polyethylenterephthalaten sind seit einiger Zeit kommerziell erhältlich. Sie werden durch Glycolyse mit niedermolekularen Glycolen oder durch Umesterung mit Dicarbonsäuren oder Dicarbonsäureanhydride aus PET Produktionsrückständen hergestellt. Ein eine weitere Möglichkeit ist die Verwendung von recyceltem PET aus bereits genutzten PET Materialien. Verfahren zur Herstellung derartiger Polyole aus PET Produktionsrückständen oder PET aus bereits genutzten PET Materialien werden beispielsweise in den Schriften US4469824, US4568717 A, WO2010015642 A1 EP1178062 A1, JP-A- 2000-191756 oder JP-A-02-011625 beschrieben.

Geeignete recycelte Polyethylenterephthalat- Polyole weisen eine Hydroxylzahl zwischen 40 und 300 mg KOH/g und eine Säurezahl kleiner als 1,0 mg KOH/g, vorzugsweise kleiner als 0,5 mg KOH/g auf. Vorzugsweise haben sie einen Wassergehalt von weniger als 0,1 Gew.-% und eine OH- Funktionalität von 1,8 bis 2,1.

Geeignete Polyisocyanate können ausgewählt werden aus der Gruppe 1,5-Naphthylendiisocyanat, 4,4'-Diphenylmethandiisocyanat (MDI), 2,4'-Diphenylmethandiisocyanat, 2,2'-Diphenylmethandiisocyanat, hydriertes oder teilhydriertes MDI (H12MDI , H6MDI), Xylylendiisocyanat (XDI), Tetramethylxylylendiisocyanat (TMXDI), Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanatocyclohexan, 1,6-Diisocyanato-2,2,4-trimethylhexan, 1,6-Diisocya-nato-2,4,4-trimethylhexan, 1-Isocyanatomethyl-3-isocyanato-1,5,5-trimethylcyclo-hexan (IPDI), chlorierte und bromierte Diisocyanate, phosphorhaltige Diisocyanate, Tetramethoxybutan-1,4-diisocyanat, Naphthalin-1,5-diisocyanat (NDI), Butan-1,4-diisocyanat, Hexan-1,6-diisocyanat (HDI), Dicyclohexylmethandiisocyanat, Tetramethylen-, Hexamethylen-, Undecan-, Dodecamethylen-, 2,2,4-Trimethyl-hexan-2,3,3-Trimethyl-hexamethylendiiso-cyanat, Cyclohexan-1,4-diisocyanat, Ethylen-diisocyanat, Methylentriphenyltriisocyanat (MIT), Phthalsäure-bisisocyanato-ethylester, Diisocyanate mit reaktionsfähigen Halogenatomen, wie 1-Chlor-methylphenyl-2,4-diisocyanat, 1-Brommethyl-phenyl-2,6-diisocyanat,3,3-Bis-chlor-methylether-4,4'-diphenyldiisocyanat. Weitere einsetzbare Diisocyanate sind Trimethylhexamethylendiisocyanat, 1,4-Diisocyanatobutan, 1,12-Diisocyanato-dodecan und Dimerfettsäurediisocyanat, Lysindiisocyanat, 4,4-Dicyclohexylmethandiisocyanat, 1,3-Cyclohexan- oder 1,4-Cyclohexandiisocyanat.

Weitere geeignete Isocyanate sind hochmolekulare Diisocyanate mit einem niedrigen Gehalt an monomeren Diisocyanaten. Dabei wird in einem ersten Schritt die Diolkomponente mit einem durchschnittlichen Molekulargewicht (Zahlenmittel M_{N} bestimmt nach DIN 55672-1:2007-08) kleiner als 2000 g/mol, insbesondere kleiner als 1500 g/mol mit einem großen stöchiometrischen Überschuß eines monomeren Diisocyanats mit einem Molekulargewicht kleiner als 500 g/mol zu einem hochmolekularen Diisocyanat umgesetzt. Nach dieser Umsetzung wird, ggf. durch Zugabe eines Nichtlösers, das hochmolekulare Diisocyanat aus dem Reaktionsgemisch ausgefällt und durch Filtration oder Zentrifugieren von nicht umgesetztem Diisocyanat befreit. Die Herstellung derartiger hochmolekularer Diisocyanate wird beispielsweise in der Schrift EP1237971 A1 beschrieben.

Für die Herstellung von reaktiven Schmelzklebstoffen besonders geeignet sind Polyisocyanate ausgewählt aus 4,4'-Diphenylmethandiisocyanat, 2,4'-Diphenylmethandiisocyanat, 2,2'-Diphenylmethandiisocyanat, Gemisch der Isomeren mit oder ohne deren höherfunktionellen Homologen sowie die vorgenannten hochmolekulare Diisocyanate.

Die Polyurethan-Zusammensetzungen zeichnen sich dadurch aus, dass das oder die Prepolymere(n) einen Gehalt an monomeren Diisocyanaten unter 5 Gew.-%, vorzugsweise unter 1 Gew.-%, besonders bevorzugt unter 0,5 Gew.-% aufweisen.

Dabei können die einzelnen Polyole separat mit dem jeweiligen Diisocyanat umgesetzt werden und dann in einem nachfolgenden Schritt entsprechend abgemischt werden. In vielen Fällen ist es aber ökonomischer, die einzusetzenden Polyole vorab im entsprechenden Verhältnis zu mischen und diese Mischung dann mit der Diisocyanat-Verbindung umzusetzen.

Als Katalysatoren können alle bekannten Verbindungen eingesetzt werden, die Isocyanatreaktionen katalysieren können. Beispiele hierfür sind Titanate wie Tetrabutyltitanat und Tetrapropyltitanat, Zinncarboxylate wie Dibutylzinndilaulat (DBTL), Dibutylzinndiacetat, Zinnoctoat; Zinnoxide wie Dibutylzinnoxid, und Dioctylzinnoxid; Organoaluminumverbindungen wie Aluminumtrisacetylacetonat, Aluminumtrisethylacetoacetat; Chelatverbindungen wie Titantetraacetylacetonat; Aminverbindungen wie Triethylenediamin, Guanidin, Diphenylguanidin, 2,4,6- tris(dimethylaminomethyl)phenol, Morpholin, N-methylmorpholin, 2-Ethyl-4-methyl imidazole, und 1 ,8-Diazabicyclo-(5,4,0)-undecen-7 (DBU), 1 ,4-Diazabi-cyclo[2,2,2]octan, N,N-Dimethylpiperazin, 1 ,8-Diazabicyclo[5.4.0]undec-7-en, Dimorpholinodimethylether, Dimorpholinodiethylether (DMDEE) oder deren Mischungen. Die Katalysatoren werden vorzugsweise in einer Menge von 0,01 bis etwa 5 Gew.-% bezogen auf das Gesamtgewicht der Zusammensetzung eingesetzt.

Als klebrigmachende Harze können z.B. Abietinsäure, Abietinsäureester, Terpenharze, Terpenphenolharze, phenolmodifizierte Styrolpolymere, phenolmodifizierte α-Methylstyrolpolymere oder Kohlenwasserstoffharze, Tallölharze, Kolophoniumharze, Pentaerythritol-Kolophoniumharze oder aromatisch modifizierte Kohlenwasserstoffharze Verwendung finden. Diese werden dann in Mengen zwischen 5 bis 30 Gew.% eingesetzt.

In speziellen Zusammensetzungen können insbesondere auch Weichmacher zugesetzt werden. Dabei handelt es sich um nicht reaktive Weichmacher, beispielsweise um naphtenische Mineralöle, Polypropylen-, Polybuten-, Polyisobutylen, Polyisopren-Oligomere, hydrierte Polyisopren- und/oder Polybutadien-Oligomere, Benzoatester, Phthalate, Adipate oder Kohlenwasserstofföle.

Pigmente und Füllstoffe (Füller) können in geringen Mengen ebenfalls enthalten sein.

Bei Bedarf können als Haftvermittler vorzugsweise organofunktionelle Silane wie hydroxyfunktionelle, (meth)acryloxyfunktionelle, mercaptofunktionelle, aminofunktionelle oder epoxyfunktionelle Silane verwendet werden. Die Mengen können von 0 bis 10 Gew.% betragen, vorzugsweise zwischen 0 und 5 Gew.%, bezogen auf die Mischung.

Als Stabilisatoren können beispielsweise Antioxidantien, wie die handelsüblichen sterisch gehinderten Phenole und/oder Thioether und/oder substituierten Benzotriazole oder die sterisch gehinderten Amine vom Typ des HALS dienen. Derartige Stabilisatoren werden beispielsweise unter der Bezeichnung Irganox von der Firma BASF vertrieben.

Eine weitere Ausführungsform der Erfindung kann als Additive noch Anteile von anderen Polymeren ohne weitere funktionelle Gruppen enthalten. Es kann sich dabei um synthetische Polymere handeln, die für z.B. Schmelzklebstoffe wichtige Eigenschaften wie Haftung, Festigkeit und Temperaturverhalten beeinflussen. Solche Polymere können beispielsweise sein Polykondensate, wie (Co)Polyamide, Polyamid/EVA-Copolymere, Polyetheramide, Polyetheresteramide; Polymerisate wie Polyvinylpyrrolidon, Polyethyloxazoline, Polyvinylmethylether, Ethylen-, Ethylen/Vinylacetat-, Ethylen/Acrylat-, Propylen-, (Meth)Acrylatcopolymere. Weiterhin können weitgehend amorphe Polyolefine, wie beispielsweise ataktisches Polypropylen, ataktisches Poly-1-buten, Ethen-Propen-Copolymere, Ethen-1-Buten-Copolymere, Ethen-Propen-1-Buten-Terpolymere, Propen-1-Buten-Copolymere, Ethen-Propen-1-Hexen-Terpolymere, Ethen-Propen-1-Octen-Terpolymere, Ethen-1-Buten-1-Hexen-Terpolymere, Ethen-1-Buten-1-Octen-Terpolymere, Ethen-1-Hexen-1-Octen-Terpolymere, Propen-1-Buten-1-Hexen-Terpolymere, Propen-1-Buten-1-Octen-Terpolymere oder Propen-1-Hexen-1-Octen-Terpolymere verwendet werden. Insbesondere sind Polymere aus der Gruppe der Poly(meth)acrylate und deren Copolymere geeignet. Es handelt sich beispielsweise um Copolymere von ethylenisch ungesättigten Verbindungen, wie C1 bis C18-Alkylestern der (Meth)acrylsäure, (Meth)acrylsäure, Ester der (Meth)acrylsäure mit Glycolethern, wie Methoxyethanol und/oder Ethoxyethanol, Vinylestern wie Vinylacetat, Vinylpropionat, Vinylestern von verzweigten Monocarbonsäuren. Insbesondere sollen solche (Meth)Acrylate ein mittleres Molekulargewicht (M_{N}) unter 60000g/mol aufweisen, insbesondere von 10000 bis 40000 g/mol. Solche weiteren Polymere können in Mengen von 0 bis 20 Gew-% enthalten sein insbesondere von 5 bis 15 Gew-%. Insgesamt sollen als Additive weniger als 25 Gew-% im Klebstoff enthalten sein.

Eine besonders bevorzugte Verwendung der erfindungsgemäßen Polyurethan-Zusammensetzungen sind reaktive einkomponentige Klebstoffe oder Schmelzklebstoffe, wie in den nachfolgenden Beispielen näher erläutert. Die Viskositäten wurden mit einem Rotationsviskosimeter des Typs Brookfield DV II+ unter Verwendung der Spindel 27 bei 5 UpM bestimmt.

### Beispiel 1: (Erfindungsgemäß)

Ein 1 K Schmelzklebstoff wird anhand der folgenden Basiszusammensetzung formuliert (Angaben in Gewichtsprozent):
21,18 % Dynacoll 7130
12,70 % PET Polyol, OH Zahl: 65, Viskosität bei 70°C: 3350 mPa*s (PETOPUROL 70, PETOPUR GmbH Schwarzheide)
25,32 % Dynacoll 7360
25,32 % Dynacoll 7380
15,28 % Desmodur 44M (4,4'-Diphenylmethandiisocyanat (MDI), Fa. Bayer)
0,2 % Irganox 1010

Die Polyesterpolyole werden in einem Glaskolben vorgelegt und bei 130°C geschmolzen. Anschließend wird Vakuum < 50 mbar angelegt und unter Rühren für 1,5 h getrocknet. Das Vakuum wird mit Stickstoff gebrochen und Desmodur 44M zugegeben. Vakuum wird angelegt und die Temperatur bei 123°C-130°C gehalten. Reaktionszeit 45 Minuten.

Viskosität bei 130°C: 22.000 mPa*s
Nach 16 h bei 130°C: 61.000 mPa*s
Anstieg der Viskosität: 177 %

Vergleichsbeispiel 2 (nicht erfinderisch):
Ein Hotmelt-Klebstoff wird anhand der folgenden Basiszusammensetzung formuliert (Angaben in Gewichtsprozent):
21,18 % Dynacoll 7130
11,70 % Sovermol 1005 (Fa. BASF)
25,32 % Dynacoll 7360
25,32 % Dynacoll 7380
16,28 % Desmodur 44M
0,2 % Irganox 1010 (Stabilisator, Fa. BASF)

Herstellung wie im Beispiel 1
Viskosität bei 130°C: 25.000 mPa*s
Nach 16 h bei 130°C: 253.000 mPa*s
Anstieg der Viskosität: 912 %

### Beispiel 3 (Erfindungsgemäß):

Ein 1 K Klebstoff wird anhand der folgenden Basiszusammensetzung formuliert (Angaben in Gewichtsprozent)
19,45 % Desmodur VKS 20 (Gemisch von Diphenylmethan-4,4 '-diisocyanat (MDI) mit Isomeren und höherfunktionellen Homologen (PMDI), Fa. Bayer)
24,80 % Desmodur 44M
25,00 % Polypropylenglykol 2000
30,45 % PET Polyol, OH Zahl: 65, Viskosität bei 70°C: 3350 mPa*s (PETOPUROL 70, PETOPUR GmbH Schwarzheide)
0,20 % DMDEE

Die Isocyanate werden in einem Glaskolben unter rühren vorgelegt und auf 70°C erwärmt. Anschließend werden die Polyole zugegeben und bei 70°C für 30 min reagieren gelassen. Danach Zugabe von DMDEE und 10 min homogenisieren.

| | |
|---|---|
| Viskosität bei 20°C: | 45.100 mPa*s |
| Nach 4 Wochen bei 40°C: | 52.300 mPa*s (gemessen bei 20°C) |
| Anstieg der Viskosität: | 16 % |

### Vergleichsbeispiel 4 (nicht erfinderisch):

Ein 1 K Klebstoff wird anhand der folgenden Basiszusammensetzung formuliert (Angaben in Gewichtsprozent)
19,45 % Desmodur VKS 20
24,80 % Desmodur 44M
25,00 % Polypropylenglykol 2000
30,45 % Renuva DWD 2007.01 (Fa. Dow)
0,20 % DMDEE

### Herstellung siehe Beispiel 3

| | |
|---|---|
| Viskosität bei 20°C: | 28.800 mPa*s |
| Nach 4 Wochen bei 40°C: | 82.300 mPa*s (gemessen bei 20°) |
| Anstieg der Viskosität: | 186 % |

Aus den vorstehenden Beispielen wird deutlich, dass nur die erfindungsgemäßen Zusammensetzungen, die als nachhaltigen Bestandteil die PET Polyole enthielten, eine ausreichende Viskositätsstabilität aufwiesen.

## Patentansprüche

1. Verwendung einer lösemittelfreien, feuchtigkeitshärtenden Polyurethan-Zusammensetzung als einkomponentiger Klebstoff oder Reaktivklebstoff, wobei die Zusammensetzung folgende Bestandteile enthält:
a) 99,9 bis 75 Gew.-% mindestens eines Polyurethan-Prepolymers mit freien Isocyanatgruppen, hergestellt durch Umsetzung von mindestens einem Polyol, ausgewählt aus der Gruppe der Polyetherpolyole und Polyesterpolyole, mit mindestens einem Polyisocyanat im stöchiometrischen Überschuß, wobei mindestens ein Polyol ein recyceltes Polyethylenterephthalat-Polyol ist, und
b) 0,1 bis 25 Gew.-% mindestens eines Additivs ausgewählt aus der Gruppe der Katalysatoren, Harze, Weichmacher, Füller, Pigmente, Stabilisatoren, Haftvermittler und weiterer Polymere,
wobei die Summe aus a) und b) 100 Gew.-% ergibt, **dadurch gekennzeichnet, dass** das oder die Prepolymere(n) einen Gehalt an monomeren Diisocyanaten unter 5 Gew.-% aufweisen.

2. Verwendung nach Anspruch 1, **dadurch gekennzeichnet, dass** als Polyetherpolyole Polypropylenglycole, Polytetramethylenglycole und/oder statistische Copolymere und/oder Blockcopolymere des Ethylenoxids und Propylenoxids verwendet werden.

3. Verwendung nach Anspruch 1 oder 2, **dadurch gekennzeichnet, dass** als Polyesterpolyole flüssige, amorphe oder kristalline Copolyester verwendet werden.

4. Verwendung nach mindestens einem der vorhergehenden Ansprüche, **dadurch gekennzeichnet, dass** das recycelte Polyethylenterephthalat durch Glycolisierung von Polyethylenterephthalat-Abfällen oder Umesterung mit von Polyethylenterephthalat-Abfällen mit Dicarbonsäuren erzeugt wurde.

5. Verwendung nach Anspruch 4, **dadurch gekennzeichnet, dass** das recycelte Polyethylenterephthalat-Polyol eine Hydroxylzahl zwischen 40 und 300 mg KOH/g und eine Säurezahl kleiner als 1,0 mg KOH/g, vorzugsweise kleiner als 0,5 mg KOH/g aufweist.

6. Verwendung nach mindestens einem der vorhergehenden Ansprüche, **dadurch gekennzeichnet, dass** der oder die flüssigen, amorphen oder kristallinen Copolyester eine Hydroxylzahl zwischen 10 und 200 mg KOH/g aufweist / aufweisen.

7. Verwendung nach mindestens einem der vorhergehenden Ansprüche, **dadurch gekennzeichnet, dass** das oder die Polyetherpolyol(e) eine Hydroxylzahl zwischen 20 und 500 mg KOH/g aufweisen.

8. Verwendung nach mindestens einem der vorhergehenden Ansprüche, **dadurch gekennzeichnet, dass** das Polyisocyanat ausgewählt wird aus Diphenylmethan-4,4'-Diisocyanat, Diphenylmethan-2,4'-Diisocyanat, oder einem Gemisch der Isomeren mit oder ohne deren höherfunktionellen Homologen.

9. Verwendung nach mindestens einem der vorhergehenden Ansprüche, **dadurch gekennzeichnet, dass** es sich bei den Polyetherpolyolen um Diole, vorzugsweise mit Hydroxylzahlen zwischen 20 und 500 mg KOH/g, handelt.

10. Verwendung nach mindestens einem der vorhergehenden Ansprüche, **dadurch gekennzeichnet, dass** keines der Polyole ein Polyetherpolyol ist.

## Claims

1. The use of a solvent-free, moisture-curing polyurethane composition as a one-component adhesive or reactive adhesive, the composition containing the following components:
a) 99.9 to 75 wt.% of at least one polyurethane prepolymer having free isocyanate groups, prepared by reacting at least one polyol selected from the group of polyether polyols and polyester polyols with at least one polyisocyanate in a stoichiometric excess, at least one polyol being a recycled polyethylene terephthalate polyol, and
b) 0.1 to 25 wt.% of at least one additive selected from the group of catalysts, resins, plasticizers, fillers, pigments, stabilizers, adhesion promoters and other polymers,
the sum of a) and b) being 100 wt.%, **characterized in that** the prepolymer(s) has/have a monomeric diisocyanate content of less than 5 wt.%.

2. The use according to claim 1, **characterized in that** polypropylene glycols, polytetramethylene glycols and/or random copolymers and/or block copolymers of ethylene oxide and propylene oxide are used as polyether polyols.

3. The use according to claim 1 or 2, **characterized in that** liquid, amorphous or crystalline copolyesters are used as polyester polyols.

4. The use according to at least one of the preceding claims, **characterized in that** the recycled polyethylene terephthalate was produced by glycolization of polyethylene terephthalate waste or transesterification of polyethylene terephthalate waste with dicarboxylic acids.

5. The use according to claim 4, **characterized in that** the recycled polyethylene terephthalate polyol has a hydroxyl number between 40 and 300 mg KOH/g and an acid number less than 1.0 mg KOH/g, preferably less than 0.5 mg KOH/g.

6. The use according to at least one of the preceding claims, **characterized in that** the liquid, amorphous or crystalline copolyester(s) has/have a hydroxyl number between 10 and 200 mg KOH/g.

7. The use according to at least one of the preceding claims, **characterized in that** the polyether polyol(s) has/have a hydroxyl number between 20 and 500 mg KOH/g.

8. The use according to at least one of the preceding claims, **characterized in that** the polyisocyanate is selected from diphenylmethane-4,4'-diisocyanate, diphenylmethane-2,4'-diisocyanate, or a mixture of the isomers with or without their higher functional homologues.

9. The use according to at least one of the preceding claims, **characterized in that** the polyether polyols are diols, preferably with hydroxyl numbers between 20 and 500 mg KOH/g.

10. The use according to at least one of the preceding claims, **characterized in that** none of the polyols is a polyether polyol.

## Revendications

1. Utilisation d'une composition de polyuréthane durcissant à l'humidité et exempte de solvant en tant qu'adhésif à un constituant ou adhésif réactif, la composition contenant les composants suivants :
a) 99,9 à 75 % en poids d'au moins un prépolymère polyuréthane à groupements isocyanate libres, produit par réaction d'au moins un polyol choisi dans le groupe des polyéther polyols et des polyester polyols, comportant au moins un polyisocyanate en excès stoechiométrique, au moins un polyol étant un polyéthylènetéréphtalate polyol recyclé, et
b) 0,1 à 25 % en poids d'au moins un additif choisi dans le groupe des catalyseurs, résines, plastifiants, charges, pigments, stabilisants, agents adhésifs et autres polymères,
la somme de a) et b) étant de 100 % en poids, **caractérisée en ce que** le ou les prépolymères présentent une teneur en diisocyanate monomère inférieure à 5 % en poids.

2. Utilisation selon la revendication 1, **caractérisée en ce que** des polypropylène glycols, des polytétraméthylène glycols et/ou des copolymères statistiques et/ou des copolymères à bloc d'oxyde d'éthylène et d'oxyde de propylène sont utilisés en tant que polyéther polyols.

3. Utilisation selon la revendication 1 ou 2, **caractérisée en ce que** des copolyesters liquides, amorphes ou cristallins sont utilisés en tant que polyester polyols.

4. Utilisation selon au moins l'une des revendications précédentes, **caractérisée en ce que** le polyéthylènetéréphtalate recyclé a été produit par glycolyse de déchets de polyéthylènetéréphtalate ou par transestérification de déchets de polyéthylènetéréphtalate avec des acides dicarboxyliques.

5. Utilisation selon la revendication 4, **caractérisée en ce que** le polyéthylènetéréphtalate polyol recyclé présente un indice d'hydroxyle compris entre 40 et 300 mg KOH/g et un indice d'acidité inférieur à 1,0 mg KOH/g, de préférence inférieur à 0,5 mg KOH/g.

6. Utilisation selon au moins l'une des revendications précédentes, **caractérisée en ce que** le ou les copolyesters liquides, amorphes ou cristallins présentent un indice d'hydroxyle compris entre 10 et 200 mg KOH/g.

7. Utilisation selon au moins l'une des revendications précédentes, **caractérisée en ce que** le ou les polyéther polyols présentent un indice d'hydroxyle compris entre 20 et 500 mg KOH/g.

8. Utilisation selon au moins l'une des revendications précédentes, **caractérisée en ce que** le polyisocyanate est choisi parmi le diphénylméthane-4,4'-diisocyanate, le diphénylméthane-2,4'-diisocyanate, ou un mélange des isomères avec ou sans leurs homologues de fonctionnalité supérieure.

9. Utilisation selon au moins l'une des revendications précédentes, **caractérisée en ce que** les polyéther polyols sont des diols, de préférence comportant des indices d'hydroxyle compris entre 20 et 500 mg KOH/g.

10. Utilisation selon au moins l'une des revendications précédentes, **caractérisée en ce qu'**aucun des polyols n'est un polyéther polyol.
